# EUROPÄISCHE PATENTSCHRIFT

(11) **EP 1 912 000 B1**
(45) Veröffentlichungstag und Bekanntmachung des Hinweises auf die Patenterteilung: **13.06.2018**
(21) Anmeldenummer: 07111146.2
(22) Anmeldetag: 27.06.2007
(51) Int. Cl.: F16K 3/02, E03B 9/08, E03F 7/02

(54) **Einsatzeinrichtung zum Einsetzen in eine Leitung und Absperrarmatur mit der Einsatzeinrichtung**
Insert device for insertion into a sewage channel and shut-off valve with the insert device
Dispositif d'utilisation destiné à l'utilisation dans une conduite et une armature de verrouillage avec le dispositif d'utilisation

(30) Priorität: 13.10.2006 DE 202006015750 U
(43) Veröffentlichungstag der Anmeldung: 16.04.2008
(73) Patentinhaber: Hawle Armaturen GmbH, 83395 Freilassing (DE)
(72) Erfinder: Käfer, Manuela, 5310 Mondsee (AT); Frey, Alexander, 83404 Feldkirchen (DE)
(74) Vertreter: Schwabe - Sandmair - Marx

(56) Entgegenhaltungen:
- WO-A-2005/098288
- US-A- 3 164 363
- US-A- 3 844 531

## Beschreibung

Die Erfindung betrifft eine Einsatzeinrichtung zum Einsetzen in eine Leitung sowie eine Armatur und insbesondere eine Absperrarmatur im Wasser- und Gasbereich mit der erfindungsgemäßen Einsatzeinrichtung nach Anspruch 1 bzw. Anspruch 13.

US 3,164,363 A bezieht sich auf ein Ventil bzw. einen Absperrschieber, das bzw. der einen Flansch mit Sitz bzw. Passung hat.

WO 2005/098288 A1 betrifft einen Plattenschieber, der Elastomerdichtungen hat.

US 3,844,531 A betrifft ein Gleitschieberventil, das aus spritzgegossenen Teilen montierbar ist, und zwar durch Ultraschallschweißtechniken, um ein kostengünstiges Ventil bereitzustellen, das hohe Beständigkeit gegenüber Leckage hat.

Es hat sich gezeigt, dass bei herkömmlichen Absperrarmaturen vorhandene Einsatzeinrichtungen, auch Absperrpaket genannt, Probleme insoweit aufweisen, dass diese nicht ausreichend in ihrer Position zueinander gesichert sind. Es ist möglich, Bestandteile dieser Einsatzeinrichtungen in vertikaler Richtung oder in horizontaler Richtung sowie in beiden Richtungen zu dejustieren, was sowohl zu Montageproblemen als auch zu Dichtigkeitsproblemen, aber auch zu Verschleiß führen kann.

Es ist dementsprechend eine Aufgabe der vorliegenden Erfindung, eine Einsatzeinrichtung zu schaffen, die ortsfest positionierbar und dicht ausgebildet ist.

Gemäß der Erfindung wird diese Aufgabe durch eine Einsatzeinrichtung gemäß dem Anspruch 1 gelöst. Auch eine entsprechende Armatur oder Absperrarmatur bevorzugt für Wasser- und Gasbereich auch im Hausanschlussbereich wird gemäß der vorliegenden Erfindung, wie im Anspruch 11 vorgeschlagen, zur Lösung der genannten Aufgabe bereitgestellt. Zweckmäßige Ausführungsformen gehen aus den Unteransprüchen hervor. Gemäß der Erfindung beruhen deren Vorteile auf einer Einsatzeinrichtung, auch Absperrpaket genannt, zum Einsetzen in eine Leitung, insbesondere eine Fluid- oder Abwasserleitung, wobei diese erfindungsgemäß zwei Einsatzelemente umfasst, die zueinander korrespondierende Verbindungselemente aufweisen, wobei mindestens eines der Einsatzelemente mit einem Dichtmittel versehen ist, das in eine dichtende Verbindung mit einem Schließelement einer Absperrarmatur bringbar ist.

Gemäß einem weiteren Aspekt der vorliegenden Erfindung wird eine Armatur, insbesondere eine Absperrarmatur einsetzbar im Wasser- und Gasbereich mit einem Schließelement zur Verfügung gestellt, das in eine Leitung einführbar ist, um den Innenquerschnitt der Leitung wenigstens teilweise zu verschließen oder freizugeben, wobei eine Einsatzeinrichtung vorgesehen ist, die gemäß der Erfindung ausgebildet ist.

Durch die Verwendung korrespondierender Verbindungselemente ist es möglich, die Einsatzeinrichtung und damit das integrierte Absperrpaket gemäß der Erfindung in einen entsprechend ausgebildeten Teil einer Leitung und insbesondere in ein Unterteil der erfindungsgemäßen Armatur oder Absperrarmatur einzulegen und damit vorzumontieren. Die Verbindungselemente sind ausgebildet, um die Einsatzelemente der erfindungsgemäßen Einsatzeinrichtung, die auch als integriertes Absperrpaket bezeichnet werden kann, in ihrer Position sowohl in vertikaler Richtung als auch in horizontaler Richtung gegenüber Deplatzierungen abzusichern. Dabei wird das Dichtmittel in der Einsatzeinrichtung, nachfolgend Absperrpaket genannt, in einer genau vorgebbaren Lage gehalten, was eine verbesserte Dichtwirkung sowie eine verbesserte Montierbarkeit für die Absperrarmatur, deren Schließelement in das Absperrpaket eingreift, gewährleistet.

Das Absperrpaket weist an seinen Einsatzelementen jeweils freie Leitungsquerschnitte auf, die der der Leitung nahe kommen, wobei das Dichtmittel im Bereich um diesen freien Leitungsquerschnitt vorgesehen ist. Das Dichtmittel weist einen Anlagedichtabschnitt auf sowie einen Anlaufdichtabschnitt. Im Bereich des Anlagedichtabschnittes liegt im sperrenden Zustand des Schließelementes, insbesondere ein Absperrschieber, das Schließelement leitungsquerschnittsseitig an dem Anlagedichtabschnitt an. Gegen einen Anlaufdichtabschnitt des Dichtmittels, insbesondere einer Absperrdichtung, liegt der Absperrschieber stirnseitig dichtend im geschlossenen Zustand an. Damit weist das Dichtmittel bzw. die Absperrdichtung einen unteren Abschnitt auf, der einen Anlaufdichtabschnitt umfasst, gegen den das Schließelement und damit der Absperrschieber gemäß einer bevorzugten Ausführungsform stirnseitig anläuft, und einen Anlagedichtabschnitt im oberen Bereich der Absperrdichtung, an dem das Schließelement anliegend vorbeiläuft, um in die geschlossene Stellung zu gelangen, und in dieser schlussendlich an dem Anlagedichtabschnitt dichtend anzuliegen.

Vorzugsweise sind die korrespondierenden Verbindungselemente an den Einsatzelementen des Absperrpakets derart ausgebildet, dass diese bei der Montage miteinander in einen formschlüssigen Eingriff bringbar sind. Beispielsweise können die Einsatzelemente in der Form von fingerartigen Erstreckungen an dem ersten Einsatzelement und als korrespondierende Aussparungen oder Ausnehmungen an dem zweiten Einsatzelement ausgebildet sein, wobei diese beim Verbinden der Einsatzelemente ineinander greifen. Ferner ist es auch möglich, die Einsatzelemente mit Fügestellen oder -flächen auszubilden, so dass die Einsatzelemente justiert verbindbar, insbesondere verklebbar oder dgl., ausbildbar sind. Gemäss der Erfindung werden die Verbindungselemente als Rastelemente und vorzugsweise als zueinander korrespondierende Eingriffselemente auszubilden. So kann beispielsweise ein Rasthaken als Einsatzelement vorgesehen werden, zu dem eine Rasthinterschneidung am zweiten Einsatzelement korrespondiert.

Die Verbindungselemente werden vorteilhafterweise verteilt über den Randbereich der Einsatzelemente an diesen festgelegt, so dass sie miteinander in eine Wirkverbindung treten können.

Vorteilhafterweise ist wenigstens eines der Eingriffselemente an seiner dem anderen Eingriffselement abgewandten Seite mit einer umfänglichen, äußeren Dichtung, insbesondere einer O-Ringdichtung, versehen, die mit einer gegenüberliegenden Oberfläche eines Anschlussabschnittes einer Leitung oder eines Unterteils einer Absperrarmatur in eine dichtende Verbindung bringbar ausgebildet ist. Dabei ist es zu bevorzugen, dass die Dichtung auf der gegenüberliegenden Seite zu der Seite angebracht wird, die durch einen Rückstau etwa von Abwasser hinter einer geschlossenen Absperrarmatur mit einem Druck beaufschlagt werden kann.

Bevorzugt weist eines der Einsatzelemente des Absperrpakets eine stirnseitig umfängliche Aussparung auf, in die das Dichtmittel teilweise aufgenommen wird.

Zudem kann das andere der Einsatzelemente eine teilumfängliche Aussparung haben, in die ein Teil des Dichtmittels eingreift, das von dem einen Eingriffselement abgewandt ist. Damit wird das Dichtmittel, insbesondere eine Absperrdichtung, im endmontierten Zustand des Absperrpakets zwischen den Einsatzelementen derart gehalten, dass das Dichtmittel soweit als möglich mechanisch gegenüber dem Anpressdruck eines Schließelementes bzw. Absperrschiebers abgestützt wird, so dass eine vorteilhafte Dichtwirkung erzielt werden kann.

Vorteilhafterweise umfassen die Eingriffselemente jeweils einen Teil eines radialen Öffnungsabschnittes einer Einführöffnung für einen Sperrschieber.

Die Einsatzelemente bilden gemäss der Erfindung jeweils eine Teilschale, so dass die eine Teilschale in Verbindung mit der anderen Teilschale einen gehäuseartigen Körper auszubilden vermag.

Zusammenfassend ist festzuhalten, dass die Einsatzeinrichtung, d.h. das Absperrpaket gemäß der Erfindung, in eine Absperrarmatur oder einen korrespondierenden Leitungsabschnitt einer Absperrarmatur einsetzbar bzw. vormontierbar ist. Das Absperrpaket kann insbesondere in das untere Teil einer Absperrarmatur eingelegt werden. Die erfindungsgemäße Ausbildung des Absperrpaketes führt zu einer vorteilhaften Absicherung der Montageposition gegenüber nachfolgenden vertikalen oder horizontalen Dejustierungen.

Das Verbindungssystem, über welches die beiden Einsatzelemente miteinander verbunden und zueinander justiert werden, führt dazu, dass die beiden Einsatzelemente im montierten Zustand insbesondere im Hinblick auf die Durchgangsöffnung für das Fluid zueinander fluchten und ferner damit auch zu dem Schließelement einer Absperrarmatur optimiert korrespondieren, so dass eine vorteilhafte Dichtfunktion bereitgestellt werden kann.

Nachfolgend wird die folgende Erfindung anhand der beigefügten Figuren näher erläutert, wobei weitere Vorzüge, Merkmale sowie Zielsetzungen gemäß der Erfindung offenbart werden. In den Darstellungen zeigen:
- Figur 1: einen perspektivischen Querschnitt durch eine Absperrarmatur mit Merkmalen gemäß der Erfindung;
- Figur 2: in einer perspektivischen Ansicht Einsatzelemente einer Einsatzeinrichtung bzw. eines Absperrpakets gemäß der Erfindung; und
- Figur 3: eine zusammengebaute Einsatzeinrichtung und damit ein zusammengebautes Absperrpaket in einer perspektivischen Darstellung, das die Einsatzelemente gemäß Figur 2 aufweist.

Nachfolgend werden gleiche oder entsprechende Bestandteile jeweils mit den gleichen Bezugszeichen benannt, so dass sich eine mehrfache Beschreibung gleicher Bestandteile erübrigt.

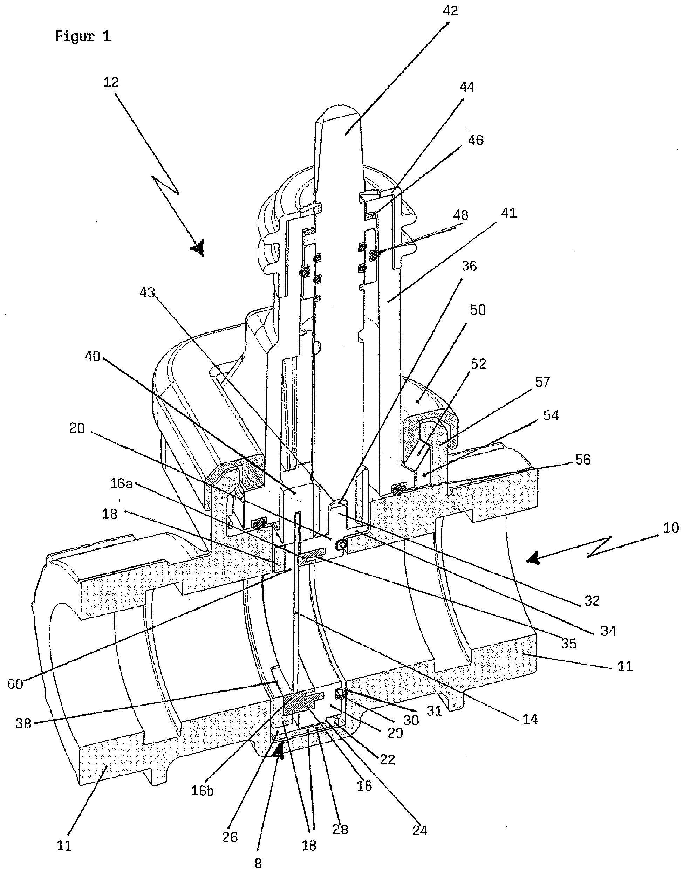

In Figur 1 ist eine Absperrarmatur mit Merkmalen gemäß der Erfindung wiedergegeben. Die Absperrarmatur umfasst einen Leitungsarmaturabschnitt 10 und einen Sperrschieberabschnitt 12. Der Leitungsarmaturabschnitt 10 weist jeweils endseitig Leitungsanschlussbereiche 11 auf. An diesen Leitungsanschlussbereichen 11 kann beispielsweise eine Hausanschlussleitung einerseits und eine T-Abzweigung eines öffentlichen Netzes angeschlossen werden. Der Sperrschieberabschnitt 12 umfasst ein Schließelement 14 in der Form eines Absperrschiebers, der in den Leitungsarmaturabschnitt 10 eingeführt werden kann, um diesen abzusperren, bzw. herausbewegt werden kann, um den Leitungsquerschnitt des Leitungsarmaturabschnitts 10 freizugeben.

Bekanntermaßen umfasst der Sperrschieberabschnitt 12 eine Spindel 42, auf der eine Spindelmutter 40 in Axialrichtung der Spindel 42 durch Drehen der Spindel bewegbar ist, so dass die Spindelmutter in Axialrichtung der Spindel voran- und zurückbewegt werden kann. An der Spindelmutter ist ein Schließelement 14, und in der vorliegenden Ausführungsform ein Absperrschieber 14 vorgesehen. Am oberen Ende der Spindel 42 ist diese in einem dichtenden Lager gehalten, das eine Gleitscheibe 46 sowie O-Ringe 48 umfasst. Das Gleitlager wird durch einen Rundgewindeadapter 44 nach außen hin mechanisch abgesichert. Das Ende der Spindel 42 kann mit einem Hebel in Wirkverbindung gebracht werden, um die Spindel in eine Drehbewegung zu versetzen, um die Spindelmutter 40 in Axialrichtung voran- oder zurückzubewegen.

Um die Spindel herum ist ein Spindelgehäuse 41 vorgesehen, das an seinem unteren Ende mittels eines Kantenschutzes 50 über ein Sicherungselement 52 sowie ein Zentrierelement 54 an einer Montageerstreckung 57 festgelegt ist, die einen Teil des Leitungsarmaturabschnitts 10 darstellt, der auch als Unterteil der Absperrmontur bezeichnet werden könnte. Eine Dichtung 56 dichtet das Spindelgehäuse 41 gegenüber dem Leitungsarmaturabschnitt 10 ab.

Die Spindel 42 umfasst eine Ausnehmung 43, die mit einer radial sperrenden Lagereinrichtung 32, hier in der Form eines Bolzens, in Wirkverbindung bringbar ist. Die radial sperrende Lagereinrichtung 32 dient dazu, die Spindel abzustützen, wenn der Absperrschieber 14 in seiner geschlossenen Stellung ist und in dieser Stellung besonders durch einen Rückstaudruck beaufschlagt wird, der auf die Spindel 42 zurückwirkt und diese aus ihrer gewünschten Lage auszulenken vermag. Ein eventueller Rückstaudruck und die durch diesen auf die Spindel ausgeübten Scher- oder Hebelkräfte können durch die radial sperrende Lagereinrichtung 32, die hier in der Form eines Bolzens vorgesehen ist, aufgefangen werden. Der Bolzen 32 kann noch mit einer Montageverjüngung 36 ausgebildet sein, die bei der Montage der Spindel in der Armatur gemäß Figur 1 bei einer erfolgreichen Zentrierung hilfreich sein kann. Da der Absperrschieber 14 gegenüber der Achse der Spindel 42 versetzt ist, muss für eine Lagerung der Spindel 42 über den Bolzen 32 eine Registriernase 34 vorgesehen werden, insoweit der Bolzen 32 nicht anderweitig beispielsweise an dem Leitungsarmaturabschnitt 10 vorgesehen ist, sondern wie hier an der Einsatzeinrichtung bzw. dem Absperrpaket 8.

Anzumerken bleibt noch, dass anstelle des Bolzens 32 auch eine ring- oder topfartige Erstreckung, etwa eine Büchse, vorgesehen sein kann, die hier jedoch nicht dargestellt ist. Diese Büchse kann wenigstens teilumfänglich das untere Ende der Spindel einfassen und somit zu dem Bolzen 32 gleichwirkend sein.

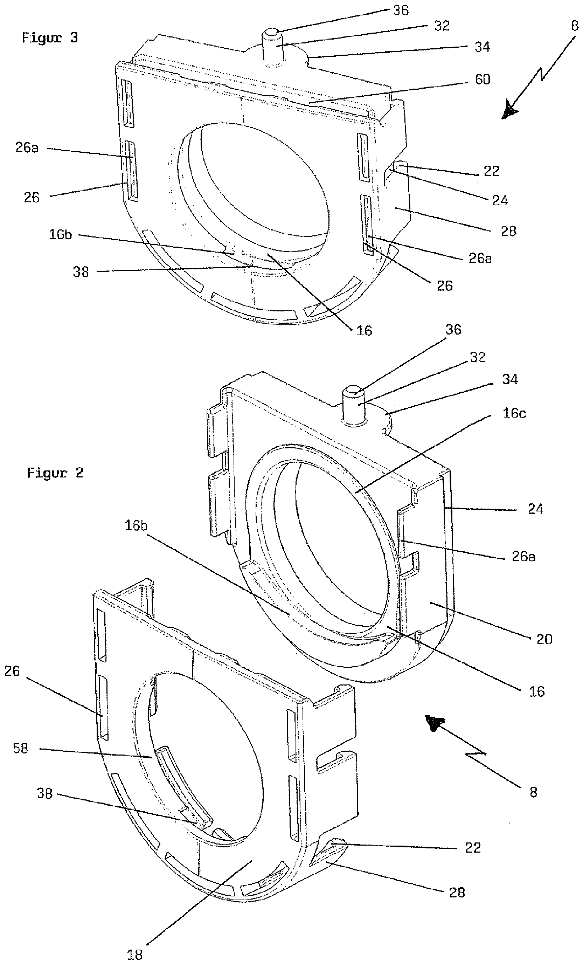

Bei der dargestellten Ausführungsform einer Absperrarmatur mit Merkmalen gemäß der Erfindung ist der Absperrschieber 14 in seine Sperrlage innerhalb des Leitungsarmaturabschnitts 10 verbracht dargestellt. Der Absperrschieber 14, der als Schließelement dient, ist über eine Sperrschiebereinführöffnung 60 in die Einsatzeinrichtung bzw. das Absperrpaket 8 eingeführt. Das Absperrpaket 8 weist ein erstes Einsatzelement 18 und ein zweites Einsatzelement 20 auf, die über Verbindungselemente 22, 24, 26 mechanisch miteinander verbunden werden können. Zwischen den Einsatzelementen 18, 20 ist eine Absperrdichtung 16 eingepasst. Die Absperrdichtung 16 umfasst einen oberen Teil 16a, der als Anlagedichtabschnitt 16c (siehe Figur 2) ausgebildet ist. Der untere Teil der Absperrdichtung 16 kann als Anlaufdichtabschnitt 16b ausgebildet sein, an den die Stirnseite des Absperrschiebers 14 dichtend in Anlage bringbar ist. Wie zu erkennen ist, ist die Absperrdichtung 16 zusätzlich mit Verankerungserstreckungen ausgebildet, die mit korrespondierenden Erstreckungen bzw. Ausnehmungen innerhalb des zweiten Einsatzelements 20 in Eingriff bringbar ist. Die Absperrdichtung 16 ist bei der dargestellten Ausführungsform mechanisch stabilisierend von den beiden Einsatzelementen 18, 20 eingefasst und kann damit auch bei einer größeren Druckbeaufschlagung eine hervorragende Dichtwirkung erzielen, zumal der Absperrschieber 14 gegenüber Scher- oder Hebelkräften durch den Bolzen 32 abgesichert ist.

Die Verbindungselemente sind im vorliegenden Fall als Rastelement 22 an dem ersten Einsatzelement 18 und als Rasthinterschneidung 24 an dem zweiten Einsatzelement 20 vorgesehen. Ferner sind Eingriffsausnehmungen 26 sowie Eingriffserstreckungen 26a (siehe Figuren 2 und 3) vorgesehen, um nicht nur eine Fixierung, sondern auch eine Unempfindlichkeit gegenüber axialen oder radialen Kräften herbeizuführen, die eine Deplatzierung der Bestandteile des Absperrpakets 8 zueinander bzw. relativ zu dem Sperrschieberabschnitt 12 oder dem Leitungsarmaturabschnitt 10 verursachen könnten.

Das Absperrpaket 8 kann einseitig mit einer Einsatzdichtung 30 versehen sein, die auf der dem ersten Einsatzelement 18 abgewandten Seite des zweiten Einsatzelements 20 vorgesehen ist, um mit einer gegenüberliegenden Dichtfläche 31 des Leitungsarmaturabschnitts 10 in eine dichtende Wirkverbindung zu treten. Das Rastelement 22 ist am Ende eines Rastelementträgers 29 ausgebildet.

Die Figur 2 zeigt das Absperrpaket 8 in der Form des ersten Einsatzelements 18 und des zweiten Einsatzelementes 20 in einem Zustand vor der Montage. Das erste Einsatzelement 18 weist ein Rastelement 22 an einem Rastelementträger 28 auf. Die Rastelemente 22 sind entlang der Außenkontur des ersten Einsatzelements 18 in regelmäßigen Abständen vorgesehen, wobei nur der Bereich der Sperrschiebereinführöffnung 60 (siehe Figuren 1 und 3) von den Rastelementen 22 freigehalten ist. Das erste Einsatzelement 18 weist ferner Eingriffsausnehmungen 26 auf, die ebenfalls entlang der Außenkontur des ersten Einsatzelementes 18 ausgenommen im Bereich der Sperrschiebereinführöffnung vorgesehen sind. Ein freier Leitungsquerschnitt 58 wird später zu einer korrespondierenden Öffnung in dem zweiten Einsatzelement 20 fluchtend ausgerichtet sein, so dass der freie Leitungsquerschnitt des Leitungsarmaturabschnitts 10 im Bereich des Absperrpakets 8 im Wesentlichen beibehalten wird. Im unteren Bereich des ersten Einsatzelements 18 ist eine Dichtungsaufnahme 38 vorgesehen, die den Anlaufdichtabschnitt 16b der Absperrdichtung 16 aufzunehmen vermag.

Entsprechend zu dem ersten Einsatzelement 18 ist das zweite Einsatzelement 20 ausgebildet. Eine Rasthinterschneidung 24 ist vorgesehen, um diverse Rastelemente 22 des ersten Einsatzelements 18 aufzunehmen. Ferner sind Eingriffserstreckungen 26a korrespondierend zu den Eingriffsausnehmungen 26 im ersten Eingriffselement 18 ausgebildet. Die Absperrdichtung 16 weist einen unteren Bereich mit einem Anlaufdichtabschnitt 16b auf, sowie einen oberen Bereich mit einem Anlagedichtabschnitt 16c.

Bei der dargestellten Ausführungsform ist die Stabilisierungserstreckung 32 in der Form eines Bolzens an einer Registriernase 34 an dem zweiten Einsatzelement 20 vorgesehen. Natürlich kann die Stabilisierungserstreckung 32 auch beispielsweise unmittelbar an einer entsprechenden Erstreckung am Leitungsarmaturabschnitt 10 vorgesehen sein.

Figur 3 zeigt das erste und das zweite Einsatzelement 18, 20 in montiertem Zustand, in dem das montierte Absperrpaket 8 in eine entsprechende Ausnehmung im Leitungsarmaturabschnitt 10 eingeführt werden kann. Die miteinander verbundenen Einsatzelemente 18, 20 bilden eine Art von Gehäuse, das eine Einführöffnung 60 für den Absperrschieber 14 bereitstellt.

### Bezugszeichenliste

- 8: Einsatzeinrichtung, Absperrpaket
- 10: Leitungsarmaturabschnitt
- 11: Leitungsanschlussbereich
- 12: Sperrschieberabschnitt
- 14: Absperrschieber, Schließelement
- 16: Absperrdichtung
- 16a: Absperrdichtung, oben
- 16b: Anlaufdichtabschnitt
- 16c: Anlagedichtabschnitt
- 18: erstes Einsatzelement
- 20: zweites Einsatzelement
- 22: Rastelement
- 24: Rasthinterschneidung
- 26: Eingriffsausnehmung
- 26a: Eingriffserstreckung
- 28: Rastelementträger
- 30: Einsatzdichtung
- 31: Dichtfläche
- 32: Stabilisierungserstreckung, Bolzen
- 34: Registriernase
- 35: Aussparung, Nut
- 36: Montageverjüngung
- 38: Dichtungsaufnahme
- 40: Spindelmutter
- 41: Spindelgehäuse
- 42: Spindel
- 43: Ausnehmung
- 44: Rundgewindeadapter
- 46: Gleitscheibe
- 48: O-Ring
- 50: Kantenschutz
- 52: Sicherungselemente
- 54: Zentrierelemente
- 56: Dichtung
- 57: Montageerstreckung
- 58: freier Leitungsquerschnitt
- 60: Sperrschiebereinführöffnung, Einführöffnung

## Patentansprüche

1. Einsatzeinrichtung zum Einsetzen in eine Leitung des Wasser- oder Gasbereichs, insbesondere in eine Absperrarmatur, wobei die Einsatzeinrichtung (8) eine radial vorgesehene Einführöffnung (60) umfasst, um ein Schließelement (14) der Absperrarmatur durchzulassen, wobei die Einsatzeinrichtung (8) ein erstes Einsatzelement (18) und ein zweites Einsatzelement (20) aufweist, wobei das erste Einsatzelement (18) und das zweite Einsatzelement (20) jeweils eine Teilschale bildet, so dass das erste Einsatzelement (18) und das zweite Einsatzelement (20) in montiertem Zustand einen gehäuseartigen Körper ausbilden, wobei die zwei Einsatzelemente (18, 20) zueinander korrespondierende Verbindungselemente (22, 24, 26, 26a) aufweisen, wobei wenigstens eines der Einsatzelemente (18, 20) mit einem Dichtmittel (16) versehen ist, das in eine dichtende Verbindung mit dem Schließelement (14) der Absperrarmatur bringbar ist, **dadurch gekennzeichnet, dass** die Verbindungselemente als Rastelemente (22, 24) und vorzugsweise als zueinander korrespondierende Eingriffselemente (26, 26a) ausgebildet sind.

2. Einsatzeinrichtung nach Anspruch 1, **dadurch gekennzeichnet, dass** das Dichtmittel (16) im Bereich des freien Leitungsquerschnittes zwischen den Einsatzelementen (18, 20) vorgesehen ist.

3. Einsatzeinrichtung nach einem der Ansprüche 1 oder 2, **dadurch gekennzeichnet, dass** die korrespondierenden Verbindungselemente (22, 24, 26, 26a) an den Einsatzelementen (18, 20) derart ausgebildet sind, dass diese bei der Montage miteinander in einen formschlüssigen Eingriff bringbar sind.

4. Einsatzeinrichtung nach einem der Ansprüche 1 oder 2, **dadurch gekennzeichnet, dass** die Einsatzelemente (18, 20) Fügestellen oder -flächen aufweisen, so dass die Einsatzelemente (18, 20) justiert verbindbar, insbesondere verklebbar sind.

5. Einsatzeinrichtung nach Anspruch 1, **dadurch gekennzeichnet, dass** wenigstens eines der Einsatzelemente an seiner von dem anderen Einsatzelement (18, 20) abgewandten Seite eine Dichtung (30), insbesondere eine O-Ringdichtung aufweist, die mit einer gegenüberliegenden Dichtfläche (31) des Leitungsarmaturabschnitts (10) oder der Leitung in eine dichtende Verbindung bringbar ist.

6. Einsatzeinrichtung nach einem der Ansprüche 1 bis 5, **dadurch gekennzeichnet, dass** eines der Einsatzelemente (18, 20) eine umfängliche Aussparung oder Nut aufweist, in die das Dichtmittel (16) teilweise aufgenommen ist.

7. Einsatzeinrichtung nach einem der Ansprüche 1 bis 6, **dadurch gekennzeichnet, dass** das andere der Einsatzelemente eine teilumfängliche Dichtungsaufnahme (38) aufweist, in die ein Teil des Dichtmittels (16) eingreift, das von dem einen Einsatzelement (20) abgewandt ist.

8. Einsatzeinrichtung nach einem der Ansprüche 1 bis 7, **dadurch gekennzeichnet, dass** das Dichtmittel (16) teilweise mit einer stirnseitigen Dichtfläche (16c) ausgebildet ist, die einem der Einsatzelemente (18, 20) zugewandt ist.

9. Einsatzeinrichtung nach einem der Ansprüche 1 bis 8, **dadurch gekennzeichnet, dass** das Dichtmittel (16) in dem anderen der Einsatzelemente (18) teilumfänglich aufgenommen ist, wobei das aufgenommene Teil des Dichtmittels (16) einen innenumfänglichen Anlaufdichtabschnitt (16b) aufweist.

10. Einsatzeinrichtung nach einem der Ansprüche 1 bis 9, **dadurch gekennzeichnet, dass** jedes Einsatzelement (18, 20) jeweils einen Teil der radial ausgerichteten Einführöffnung (60) umfasst.

11. Absperrarmatur, insbesondere Absperrarmatur des Wasser- oder Gasbereichs, mit einem Schließelement (14), das in eine Leitung einführbar ist, um den Innenquerschnitt der Leitung wenigstens teilweise zu verschließen oder freizugeben, **dadurch gekennzeichnet, dass** eine Einsatzeinrichtung (8) nach einem der Ansprüche 1 bis 10 vorgesehen ist.

## Claims

1. An insert device for insertion into a conduit in the field of water or gas, in particular into a shut-off valve, wherein said insert device comprises a radially provided insertion opening (60) for letting a closing member (14) of said shut-off valve pass through, wherein said insert device (8) comprises a first insert member (18) and a second insert member (20), wherein said first insert member (18) and said second insert member (20) each form a partial shell such that said first insert member (18) and said second insert member (20) form a housing-like body in the assembled state, wherein said two insert members (18, 20) have mutually corresponding connection elements (22, 24, 26, 26a), wherein at least one of said insert members (18, 20) is provided with a sealing means (16) which can be brought into a sealing connection with said closing member (14) of said shut-off valve, **characterized in that** said connection elements are formed as latching elements (22, 24) and preferably as mutually corresponding engagement elements (26, 26a).

2. The insert device according to claim 1, **characterized in that** said sealing means (16) is provided in the region of the free conduit cross-section between said insert members (18-20).

3. The insert device according to any one of claims 1 or 2, **characterized in that** the corresponding connecting elements (22, 24, 26, 26a) are formed on said insert members (18, 20) such that they can be brought into form-fitting engagement with each other during assembly.

4. The insert device according to any one of claims 1 or 2, **characterized in that** said insert members (18, 20) have joining locations or surfaces, so that said insert members (18, 20) are connectable, in particular adhesively bondable, in an adjusted manner.

5. The insert device according to claim 1, **characterized in that** at least one of said insert members comprises, on the side thereof facing away from the other insert member (18, 20), a seal (30), in particular an O-ring seal, which can be brought into a sealing connection with an opposite sealing surface (31) of the conduit fitting section (10) or the conduit.

6. The insert device according to any one of claims 1 to 5, **characterized in that** one of said insert members (18, 20) has a circumferential recess or groove in which said sealing means (16) is partially received.

7. The insert device according to any one of claims 1 to 6, **characterized in that** the other of said insert members has a partially circumferential seal receptacle (38) with which a part of said sealing means (16) facing away from the one insert member (20) engages.

8. The insert device according to one of claims 1 to 7, **characterized in that** said sealing means (16) is partially formed with a front-side sealing surface (16c) which faces one of said insert members (18, 20).

9. The insert device according to any one of claims 1 to 8, **characterized in that** said sealing means (16) is received partially circumferentially in the other of said insert members (18), wherein the received part of said sealing means (16) has an inner circumferential stopping sealing portion (16b).

10. The insert device according to any one of claims 1 to 9, **characterized in that** each insert member (18, 20) comprises a part of the radially oriented insertion opening (60).

11. A shut-off valve, in particular a shut-off valve in the field of water or gas, comprising a closing member (14) which can be introduced into a conduit in order to block or unblock the inner cross-section of said conduit at least partially, **characterized in that** an insert device according to any one of claims 1 to 10 is provided.

## Revendications

1. Dispositif d'insert destiné à être inséré dans une conduite d'eau ou de gaz, en particulier dans un robinet d'arrêt, le dispositif d'insert (8) comprenant une ouverture d'introduction (60) disposée radialement pour laisser passer un élément de fermeture (14) du robinet d'arrêt, le dispositif d'insert (8) comportant un premier élément d'insert (18) et un second élément d'insert (20), le premier élément d'insert (18) et le second élément d'insert (20) formant respectivement une coque partielle, de sorte qu'à l'état monté le premier élément d'insert (18) et le second élément d'insert (20) forment un corps de type boîtier, les deux éléments d'insert (18, 20) comportant des éléments de connexion (22, 24, 26, 26a) qui se correspondent, au moins un des éléments d'insert (18, 20) étant pourvu d'un moyen d'étanchéité (16) qui peut être mis en liaison étanche avec l'élément de fermeture (14) du robinet d'arrêt, **caractérisé en ce que** les éléments de connexion prennent la forme d'éléments d'encliquetage (22, 24) et de préférence d'éléments d'engagement (26, 26a) qui se correspondent.

2. Dispositif d'insert selon la revendication 1, **caractérisé en ce que** le moyen d'étanchéité (16) est disposé dans la région de la section transversale libre de la conduite entre les éléments d'insert (18, 20).

3. Dispositif d'insert selon l'une des revendications 1 ou 2, **caractérisé en ce que** les éléments de connexion qui se correspondent (22, 24, 26, 26a) sont formés sur les éléments d'insert (18, 20) de telle manière qu'ils peuvent être mis en prise de forme les uns avec les autres pendant le montage.

4. Dispositif d'insert selon l'une des revendications 1 ou 2, **caractérisé en ce que** les éléments d'insert (18, 20) comportent des points ou des surfaces d'assemblage, de sorte que les éléments d'insert (18, 20) peuvent être reliés, en particulier collés, de manière ajustée.

5. Dispositif d'insert selon la revendication 1, **caractérisé en ce qu'**au moins un des éléments d'insert comporte un joint d'étanchéité (30), en particulier un joint annulaire, sur son côté détourné de l'autre élément d'insert (18, 20), le joint pouvant être mis en liaison étanche avec une surface d'étanchéité (31) opposée de la section de robinet de conduite (10) ou de la conduite.

6. Dispositif d'insert selon l'une des revendications 1 à 5, **caractérisé en ce qu'**un des éléments d'insert (18, 20) comporte un évidement ou une rainure circonférentielle dans laquelle le moyen d'étanchéité (16) est partiellement reçu.

7. Dispositif d'insert selon l'une des revendications 1 à 6, **caractérisé en ce que** l'autre des éléments d'insert comporte un logement de joint (38) partiellement circonférentiel dans laquelle s'engage une partie de l'élément d'étanchéité (16), qui est détourné de l'élément d'insert (20).

8. Dispositif d'insert selon l'une des revendications 1 à 7, **caractérisé en ce que** l'élément d'étanchéité (16) est formé en partie avec une surface d'étanchéité (16c) frontale qui est orientée vers l'un des éléments d'insert (18, 20).

9. Dispositif d'insert selon l'une des revendications 1 à 8, **caractérisé en ce que** le moyen d'étanchéité (16) est reçu dans l'autre élément d'insert (18) sur une partie de sa circonférence, la partie du moyen d'étanchéité (16) reçue comportant une section de joint d'arrêt d'eau (16b) disposée sur sa circonférence intérieure.

10. Dispositif d'insert selon l'une des revendications 1 à 9, **caractérisé en ce que** chaque élément d'insert (18, 20) comprend respectivement une partie de l'ouverture d'introduction (60) orientée radialement.

11. Robinet d'arrêt, en particulier robinet d'arrêt d'une conduite d'eau ou de gaz, avec un élément de fermeture (14) qui peut être introduit dans la conduite pour au moins partiellement fermer ou ouvrir la section transversale intérieure de la conduite, **caractérisé en ce qu'**un dispositif d'insert (8) selon l'une des revendications 1 à 10 y est disposé.
